# EUROPEAN PATENT APPLICATION

(11) **EP 4 224 068 A1**
(43) Date of publication of application: **09.08.2023**
(21) Application number: 23155040.1
(22) Date of filing: 06.02.2023
(51) Int. Cl.: F24C 15/00, F21V 21/30, H05B 6/64

(54) **OVEN MUFFLE PROVIDED WITH A SPOT LIGHTING DEVICE TO ILLUMINATE THE COOKING CHAMBER**

(30) Priority: 08.02.2022 IT 202200002249
(71) Applicant: SMEG S.p.A., 42016 Guastalla (RE) (IT)
(72) Inventor: MASTILOVIC, Nebojsa, 42016 GUASTALLA (RE) (IT); RASCHI, Lorenzo, 42016 GUASTALLA (RE) (IT)
(74) Representative: Studio Torta S.p.A.

(57) **Abstract**

An oven muffle (1), the muffle (1) comprising: a cooking chamber (2) with an opening, a back wall (3) opposite the opening, a roof wall (4), a floor wall (5), two side walls (6,7) ; an outer frame (8) covering at least the roof wall of the cooking chamber; a spot lighting device (9) coupled to a wall of the cooking chamber; wherein the spot lighting device comprises a base body (10) coupled to the outer frame and an illuminating body (11) which from said base penetrates into the cooking chamber through a hole obtained in a wall of the cooking chamber; wherein the illuminating body (11) is movably coupled to the base body so that it can be switched into a plurality of different positions relative to the base body.

## Description

### Cross-reference to related applications

This patent application claims priority from Italian patent application no. 102022000002249 filed on February 08, 2022, the entire disclosure of which is incorporated herein by reference.

### Technical field

The present invention relates to an oven muffle. Therefore, the technical field of reference for the present invention is that of ovens (domestic and industrial) for cooking or heating foods. In more detail, the technical field of the present invention relates to oven muffles provided with lighting devices suitable for illuminating the cooking chamber so that a user can easily check the state of cooking or heating of foods. In detail, the present invention relates to a type of lighting device for ovens know as spot lights or spot lighting devices, in which the light is emitted by a single spot source, typically an LED. The technical field of the present invention is not limited by a particular type of cooking of foods. In this sense, an oven according the present invention can be an electric oven, a gas oven, a steam oven or oven with humidifier, a microwave oven or a hybrid oven with various cooking modes. The problem to be addressed by the present invention is that of producing a spot lighting device for muffles capable of assuming different configurations to adapt to different muffles.

### State of the art

As is known, domestic or industrial ovens for cooking or heating foods comprise a particular inner structure known in the field as muffle which defines the cooking chamber. An outer frame is present outside the muffle and between the muffle and this outer frame a gap is provided to house the devices required for correct operation of the oven. The muffle comprises a plurality of walls, interconnected or produced directly in one piece. In particular, the muffle comprises a back wall, a roof wall, a floor wall and two side walls. A front door is then added to this structure. As is known, the door is movable (usually hinged to a side wall or to the floor wall) between a first position in which it closes the cooking chamber to reduce dissipation of the cooking heat and a second position in which it allows the user to access the cooking chamber.

Starting from this known structure, the market currently offers muffles provided with lighting devices configured to illuminate the cooking chamber so that a user can easily check the state of cooking or heating of foods. Different types of lighting devices used for this purpose are available. One example refers to lighting devices with a lighting source or spot lighting source usually located at the roof of the cooking chamber, also known as spot light. This solution is optimal for ovens of limited size or without shelves as in these cases a spot light, usually coming from the roof, is able to illuminate the whole of the cooking chamber. The present invention refers to this type of lighting device.

In this context, the prior art substantially provides for two different embodiments. In the first solution a spot light source is coupled to the roof wall of the muffle on the face inside the cooking chamber. In the second solution the roof wall of the muffle is provided with a through hole through which a lighting device constrained to the outer frame covering the muffle penetrates into the cooking chamber. This second embodiment is preferable as the power supply of the lighting device can advantageously be housed in the gap between muffle and outer frame in which the temperatures are obviously lower than those present in the cooking chamber. If the light source is an LED, this solution is necessary to protect it from the high temperatures, which it would be unable to withstand.

However, this second embodiment also has some drawbacks. In fact, known lighting devices of this type do not allow any adjustment or any possibility of being switched into different configurations to adapt to different needs or to different types or sizes of ovens. In fact, when there is a change in the conditions the prior art currently suggests also changing the device coupled to the muffle.

US2021131671A1 describes an oven muffle provided with a spot lighting device of the cooking chamber. US2021131671A1 in particular describes a lighting device comprising a support configured to be coupled to a support of the oven and a light guide with an LED source, which starting from the support penetrates into the cooking chamber. According to US2021131671A1 the light guide is movable relative to the support so that the lighting device can assume different configurations suitable for its use in different types of ovens.

Starting from this prior art there is currently the need to improve installation and positioning of a lighting device of this kind relative to the rest of the muffle structure.

### Description of the invention

Starting from this prior art, an object of the present invention is therefore to produce an oven muffle provided with an innovative spot lighting device of the cooking chamber suitable for improving the solutions disclosed by the above-mentioned prior art documents relating to the prior art. The main object of the present invention is to produce a muffle provided with a spot lighting device that can be simply switched into different configurations before installation to adapt to different types or shapes of muffle, which, in particular, is coupled to the rest of the muffle structure in a manner that is improved or advantageous from a technical point of view.

In accordance with these objects, the present invention relates to an innovative oven muffle, wherein said muffle comprises a substantially box-shaped cooking chamber with a front opening (as known). The cooking chamber thus comprises:
- a back wall (opposite the opening), a roof wall, a floor wall, two side walls (and optionally a door hinged to a side wall or to the floor wall at the opening).

In addition to the cooking chamber, the muffle of the present invention further comprises:
- an outer frame covering at least the roof wall of the cooking chamber, usually at least the roof wall and the side walls; a gap being provided between the outer frame and roof wall for housing some components of the muffle and in which cooling air, for example generated by a fan (preferably also arranged in the gap) usually circulates;
- a spot lighting device.

In particular, the spot lighting device comprises a base body coupled to the outer frame and an illuminating body which, from said base, penetrates into the cooking chamber through a hole obtained in a wall of the cooking chamber.

According to the present invention, the illuminating body is movably coupled to the base body so that, before installation, it can be switched into a plurality of different positions relative to the base body.

In this way, advantageously a single lighting device is suitable to be installed in different types or sizes of oven to provide correct illumination. In fact, before installation, it is sufficient to orient the illuminating body as desired relative to the base body constrained to the outer frame to obtain the illumination desired.

The present invention provides for a particular and advantageous arrangement of said lighting device relative to the rest of the muffle structure as mentioned previously. Preferably, the base body of the lighting device comprises at least one coupling plate with at least one corresponding hole obtained in the outer frame. According to the invention, the illuminating body comprises a light guide with a first end provided with an LED source and which is coupled to the base body in the gap (the base body preferably comprises lip portions which protrude from the plate into the gap). The light guide, starting from the first end in the gap, penetrates into the cooking chamber passing through a single hole obtained in the roof wall. Therefore, the light guide of the present invention is installed in the muffle so as to have two portions, respectively a first portion in the gap starting at the first end with the LED and ending at the hole obtained in the roof wall and a second portion which starts from the hole obtained in the roof wall, penetrates into the cooking chamber and ends at a second free end configured to deliver light.

This arrangement with a first end housed in the gap is very advantageous from a technical point of view, also due to the fact that in this way the LED is located in an area involved in the passage of cooling air fed into the gap by a fan (usually already present in the muffle). Therefore, with the present invention the LED and the electronics connected thereto are cooled and protected from overheating, which could damage them.

Preferably, the at least one plate of the base body and the corresponding at least one hole of the outer frame have complementary profiles and edges, so that when the lighting device is installed there is no interruption along the outer frame. This solution makes the step of installation and of eventually replacing the lighting device much simpler and less cumbersome.

Preferably, the illuminating body is rotatable relative to the base body about an axis passing through its first end (the one with the LED). The axis lies in a plane parallel to the wall of the oven that houses the device.

Preferably, the hole in the roof wall through which the illuminating body passes is obtained in the proximity of the opening of the cooking chamber.

Preferably, the axis of rotation of the illuminating body is an axis orthogonal to the side walls, so that the body is rotatable between a position substantially orthogonal to the floor wall and a position substantially orthogonal to the back wall.

Preferably, the rotation of the illuminating body relative to the base body is of the stepped type to provide for a plurality of predefined positions.

Preferably, the device comprises a visual indication of the position assumed by the illuminating body relative to the base body along a scale of positions.

Preferably, at least the portion of the light guide inside the cooking chamber is covered by a protective cover from which only the second end of the light guide protrudes.

Preferably, at least the free end of the light guide inside the cooking chamber is made of glass suitable to allow the delivery of light.

Preferably, at the LED source the illuminating body comprises a heat dissipating device.

Preferably, the lighting device comprises an actuating device configured to move the illuminating body relative to the base body.

### Description of an embodiment of the invention

Further features and advantages of the present invention will be clear from the following description of a non-limiting example of embodiment thereof, with reference to the figures of the accompanying drawings, wherein:
- Fig. 1 is a schematic view of an embodiment of a muffle according the present invention;
- Fig. 2 is a sectional view of the muffle of Fig. 1 along a plane parallel to the side walls;
- Fig. 3 is an enlarged view of a component of Fig. 2.

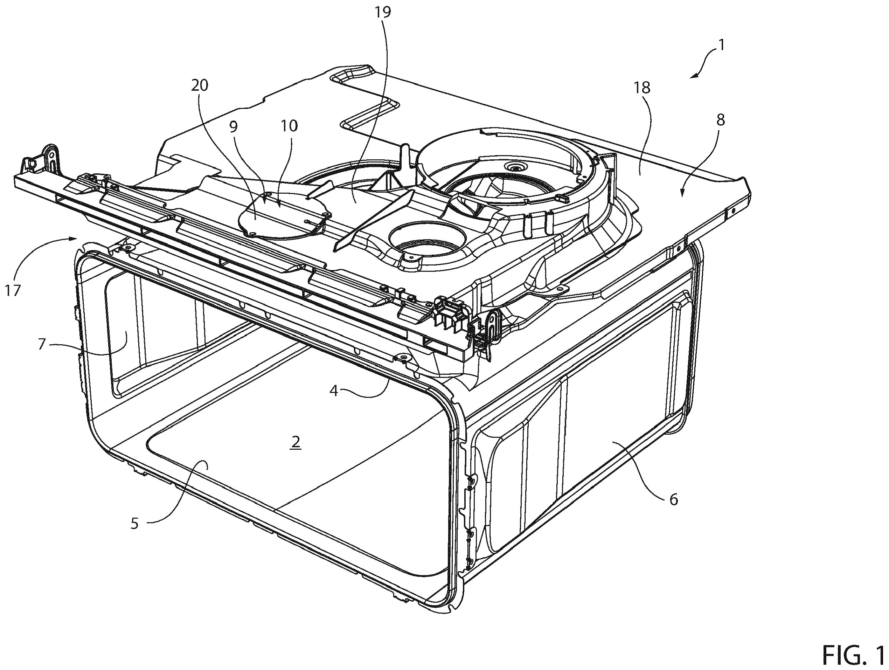

With reference to the accompanying figures, Fig. 1 shows an example of embodiment of an oven muffle according the present invention indicated as a whole with the reference number 1. According to this example, the muffle 1 comprises:
- a cooking chamber 2 provided with an opening for inserting and removing foods; the chamber 2 is defined by a back wall 3 opposite the opening, a roof wall 4, a floor wall 5 opposite the roof 4 and two side walls 6, 7 (and optionally a door at the opening);
- an outer frame 8 covering the roof wall 4 creating a gap 17 between these components (the outer frame can also comprise other portions, for example at the side walls);
- a spot lighting device 9 (in Fig. 1 only an outer face 20 of what will be defined as base body 10 is visible) coupled to the frame 8 covering the roof wall 4 of the cooking chamber 2. In this example, the outer frame 8 comprises an inner wall 18 facing the roof wall 4 and an outer wall 19 facing the first inner wall 18. The outer face 20 of the base body 10 of the spot lighting device 9 is shown here coupled to a corresponding hole of the outer wall 19 of the frame 8. As can be seen, the outer face 20 of the base body 10 is a face of an outer plate shaped in a complementary manner to the hole of the outer wall 19 of the frame 8 so that there are no interruptions in the structure.

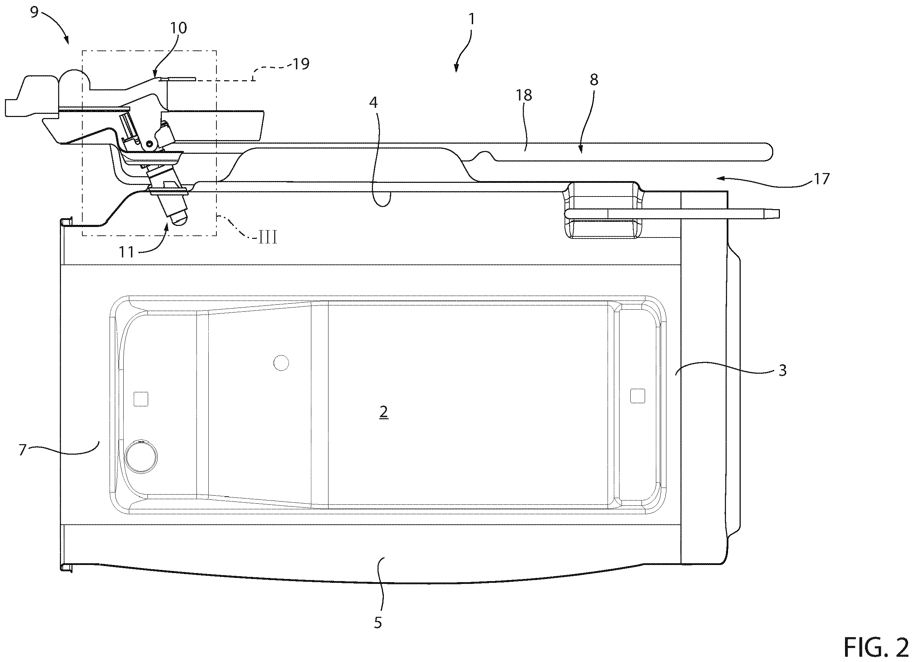

Fig. 2 shows a sectional view of the muffle 1 of Fig. 1 along a plane parallel to the side walls 6 and 7 and passing through the lighting device 9. This figure shows some features of the spot lighting device 9. In particular, in this example, the lighting device 9 comprises:
- a base body 10 (the one mentioned above and partly visible in Fig. 1) in the form of two discs 20 and 21 respectively coupled to holes obtained in the outer 19 and inner 18 wall of the outer frame 8; and
- an illuminating body 11 coupled to the base 10 in the gap 17 and which penetrates into the cooking chamber 2 through a hole obtained in the wall 4 of the cooking chamber 2 (preferably substantially at the opening).

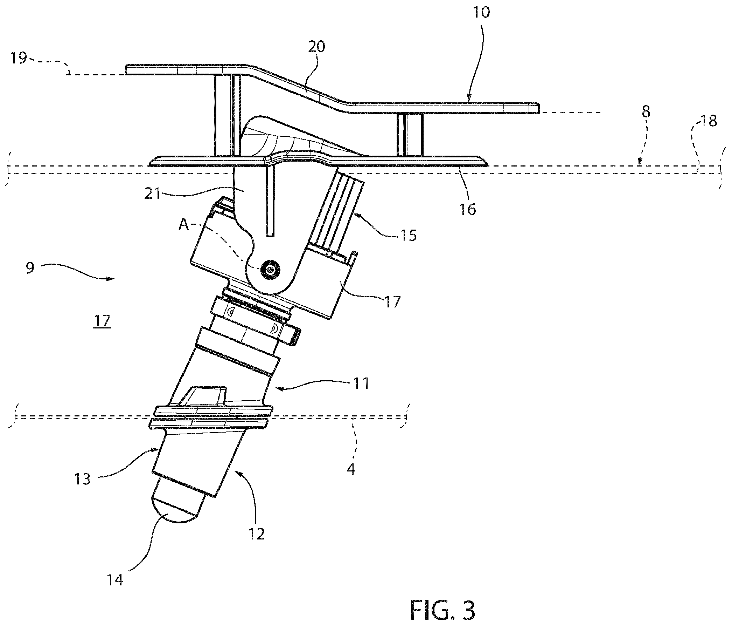

Fig. 3 shows an enlargement of the detail indicated with III in Fig. 2, i.e., an enlargement of the lighting device 9. According to this example, the illuminating body 11 comprises a light guide 12 having a first end constrained to the base body 10 in the gap 17 between outer frame 8 and roof 4. In particular, for this purpose the base body 10 comprises two lip portions which from the inner plate 16 extend into the gap 17. The coupling between the illuminating body 11 and the base body 10 is of the type rotatable about the axis, indicated with A in Fig. 3, so that the illuminating body 11 is rotatable relative to the base body 10 to be able to assume (before installation) a plurality of different angles relative to the roof 4 or to the outer frame 8 to which the base 10 will be fixed. In this example, the axis A passes through a plane parallel to the roof wall 4 of the cooking chamber 2 and is orthogonal to the side walls 6, 7. The movement of the illuminating body 11 relative to the base body 10 is of the stepped type to provide for a plurality of predefined positions and for this purpose a visual indication of the position assumed by the illuminating body 11 relative to the base body 10 along a scale of positions is provided. As can be seen in Fig. 3, and as mentioned previously, the illuminating body 11 shown comprises a cylindrical light guide 12 provided with an LED source housed inside a base 17 coupled at the first end to the base body 10 in the gap 17. Advantageously, therefore, the LED source is housed outside the cooking chamber 2 and in an area (in the gap 17) involved by a flow of cooling air generated by a fan. In this example, the LED source is also provided with a heat dissipating device 15, also known as heatsink. The light guide 12 extends from the LED source until penetrating into the cooking chamber 2. To protect the light guide 12, in the cooking chamber, the light guide is covered by a protective cover 13 from which only the second end 14 protrudes. At least said end 14 is made of glass suitable to allow the delivery of a diffused light throughout the cooking chamber.

Finally, it is evident that modifications and variants can be made to the invention described herein without departing from the scope of the appended claims.

## Claims

1. An oven muffle (1), wherein the muffle (1) comprises:
- a cooking chamber (2) provided with an opening, a back wall (3) opposite the opening, a roof wall (4), a floor wall (5) and two side walls (6, 7);
- an outer frame (8) covering at least the roof wall (4) creating a gap (17) between the outer frame (8) and the roof wall (4), at least one fan for the generation of a flow of cooling air preferably being provided in the gap (17);
- a spot lighting device (9);
wherein the spot lighting device (9) comprises:
- a base body (10) coupled to the outer frame (8);
- an illuminating body (11) movably coupled to the base body (10) so that before installation it can be switched into a plurality of different positions relative to the base body (10); wherein the illuminating body (11) comprises:
- a light guide (12) which from a first end provided with an LED source housed in the gap penetrates into the cooking chamber (2) through a hole obtained in the roof wall (4).

2. Muffle as claimed in claim 1, wherein the base body (10) comprises at least one coupling plate (16, 20) with at least a corresponding hole obtained in the outer frame (8, 18, 19); the at least one plate (16, 20) of the base body (10) and the at least one corresponding hole of the outer frame (8) having complementary profiles so that when the lighting device (9) is installed there is no interruption along the outer frame (8).

3. Muffle as claimed in claim 1 or 2, wherein the illuminating body (11) is rotatable relative to the base body (10) about an axis (A) passing through its first end, the axis (A) being in a plane parallel to the roof wall (4) of the cooking chamber (2).

4. Muffle as claimed in claim 3, wherein the axis of rotation (A) of the illuminating body (11) is an axis orthogonal to the side walls (6, 7).

5. Muffle as claimed in any one of the preceding claims, wherein the movement of the illuminating body (11) relative to the base body (10) is of the stepped type to provide for a plurality of predefined positions.

6. Muffle as claimed in claim 5, wherein the device comprises a visual indication of the position assumed by the illuminating body (11) relative to the base body (10) along a scale of positions.

7. Muffle as claimed in any one of the preceding claims, wherein at least the portion of the light guide (12) within the cooking chamber (2) is covered by a protective cover (13) from which only a second end (14) of the light guide (12) protrudes.

8. Muffle as claimed in claim 7, wherein at least the free end (14) of the light guide (12) inside the cooking chamber (2) is made of glass suitable to allow the delivery of light.

9. Muffle as claimed in any one of the preceding claims, wherein the first end of the light guide (12) is provided with a heat dissipating device (15).

10. Muffle as claimed in any one of the preceding claims, wherein the illuminating device (9) comprises an actuating device configured to move the illuminating body (9) relative to the base body (10).
